# EUROPEAN PATENT SPECIFICATION

(11) **EP 0 817 180 B1**
(45) Date of publication and mention of the grant of the patent: **14.03.2001**
(21) Application number: 97202997.9
(22) Date of filing: 11.05.1992
(51) Int. Cl.: G11B 7/00, G11B 7/125, G11B 11/10, G11B 20/10, G11B 19/02

(54) **Optical data storage and retrieval system and method**
System und Verfahren zur optischen Speicherung und Wiedergewinnung von Daten
Système et procédé de stockage et d' extraction optique de données

(30) Priority: 10.05.1991 US 698673; 12.09.1991 US 758059
(43) Date of publication of application: 07.01.1998
(62) Divisional of application: 92913851.9
(73) Proprietor: DISCOVISION ASSOCIATES, Irvine, CA 92714 (US)
(72) Inventor: Kimura, Noboru, Torrance, CA 90505 (US); Vitullo, Ronald G., Laguna Niguel, CA 92667 (US); Yamazaki, Yasuhiro, Cypress, CA 90630 (US)
(74) Representative: Vuillermoz, Bruno

(56) References cited:
- EP-A- 0 064 196
- EP-A- 0 265 849
- EP-A- 0 289 260
- EP-A- 0 320 975
- EP-A- 0 388 271

## Description

### Background of the Invention

This invention relates to digital data storage and retrieval and, more particularly, an optical data storage and retrieval system and method.

Recordable/erasable optical disks are currently available for use as data storage media. Magneto-optical recording is the technique commonly used to store the data and/or retrieve the data from the disk. During recording a magnetic field orients the polarity of a generalized area on the disk while a laser pulse heats a localized area thereby fixing the polarity of the smaller area. The localized area with fixed-polarity is commonly called a pit. Some encoding systems use the existence or absence of a pit on the disk to define the recorded data as a "1" or "0" respectively. The most commonly used encoding system for this pit type recording is the run length limited (RLL) 2,7 code because it gives the highest data to pit ratio. This type of recording, however, does not lead to higher density because amplitude and timing margins deteriorate very rapidly as frequency is increased.

EP-A-388 271 is directed to an apparatus for optically recording an information signal onto a recording medium which includes a light source, means for moving the recording medium, means for generating a series of consecutive clock signals, and a light source drive means for modulating and driving the light source in response to content of a digital output data signal.

EP-A-0 320 975 is directed to a method of recording in, or reproducing information on, a recording medium characterized in that data is recorded or reproduced on or from the recording areas while following in the track by means of a servo mechanism including a lowpass filter circuit having a cut-off frequency which lower than the frequency at which the tracking signal detecting marks make appearance in the course of detection thereof. This document is also directed to such a method characterized by a synchronizing prepit provided for every predetermined number of pairs of wobbling prepits wherein positional information for the access to the track is detected by detecting the phase of the wobbling prepits with the aid of a signal derived from the synchronizing prepits.

EP-A-0 265 849 is directed to an optical recording and reproducing apparatus including a movable optical head, first demodulating means, means for detecting the position of the optical head, second demodulating means, and driving means.

### Summary of the Invention

According to the invention there is provided a method for storing data on an optical medium according to claim 1, and an apparatus for storing data on an optical medium according to claims 6, 10 or 13. Embodiments of the invention are specified in the sub-claims.

### Brief Description of the Drawings

FIG. 1 is a block diagram showing the optical data storage and retrieval system;
FIG. 2 is a series of waveforms showing uniform laser pulsing under a pulsed GCR format and non-uniform laser pulsing under an RLL 2,7 format;
FIG. 3 is a series of waveforms showing laser pulsing for various data patterns adjusted by the write compensation circuit;
FIG. 4 is a schematic diagram showing the write compensation circuit;
FIG. 5 is a series of waveforms showing laser pulsing for amplitude asymmetry correction;
FIG. 6 is a schematic diagram showing the amplitude asymmetry correction circuit;
FIG. 7 is a block diagram showing the basic relationship of elements of the pulse slimming means;
FIG. 8 is a series of waveforms showing threshold adjustments by the dynamic threshold circuit;
FIG. 9 is a schematic diagram for the dynamic threshold circuit; and
FIG. 10 is a schematic block diagram of an optical data storage and retrieval system incorporating downward compatibility.

### Detailed Description of the Specific Embodiments

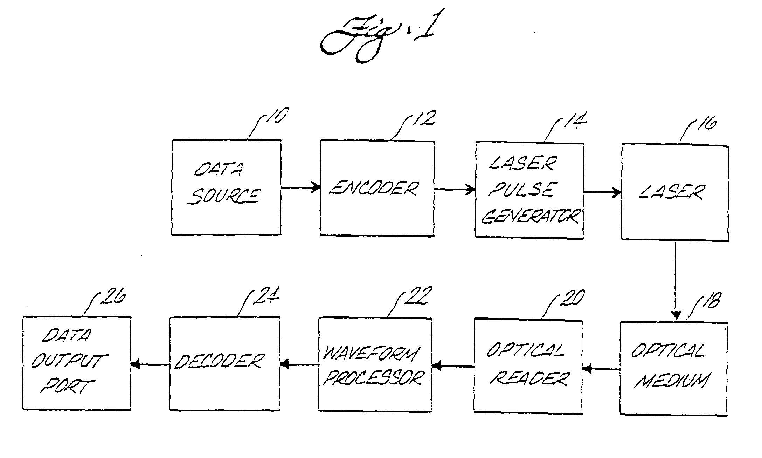

In FIG. 1, during the write mode, a data source 10 transmits data to an encoder 12. The encoder 12 converts the binary data into binary code bits. The code bits are then transmitted to a laser pulse generator 14 where the code bits are converted to energizing pulses for turning a laser 16 on and off. In the preferred embodiment, a code bit "1" indicates that the laser will be pulsed on for a fixed duration independent of the code bit pattern. However, depending on the laser and optical medium being used, performance may be enhanced by adjusting the occurrence of the laser pulse or by extending the otherwise uniform pulse duration. The output of laser 16 heats localized areas of an optical medium 18 which is being exposed to a magnetic flux that sets the polarity of the magnetic material on the optical medium 18. During reads of the optical medium, a laser beam is impinged on the surface of the medium. The polarization of the reflected laser beam will be dependent upon the polarity of the magnetic surface of the optical medium.

During the read mode, the reflected laser beam will be inputted into an optical reader 20, where the read code output will be sent to the waveform processor 22. The processed read code will be sent to a decoder 24 where output data will be transmitted to a data output port 26 for transmission.

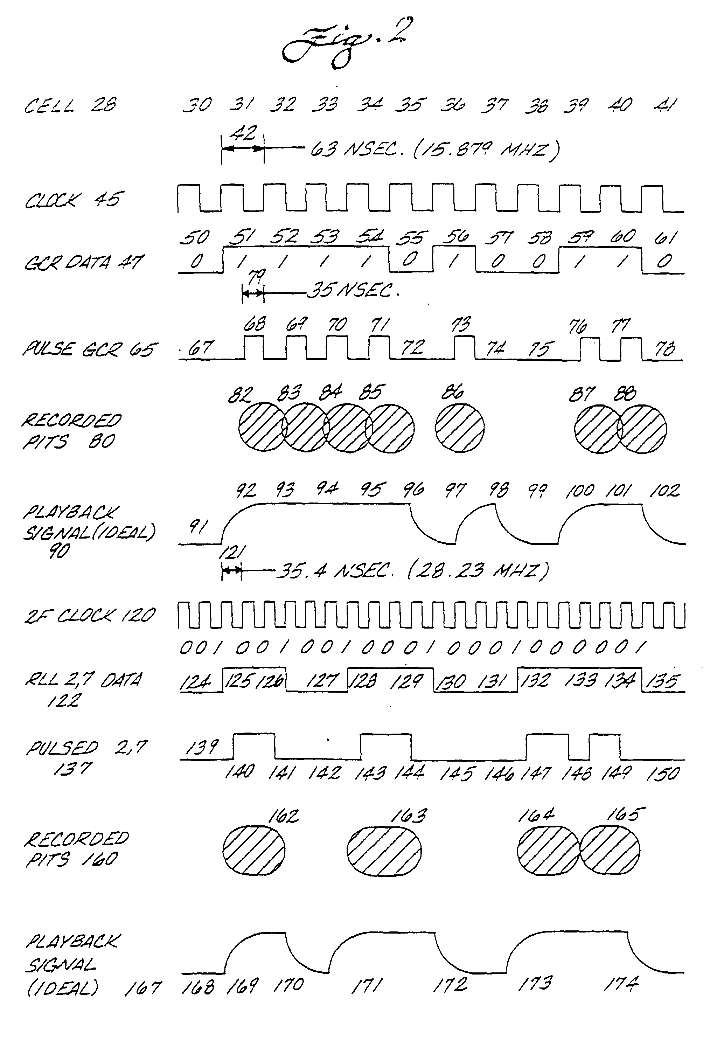

FIG. 2 depicts the differences between the laser pulsing in GCR 8/9 and RLL 2,7 code formats. In GCR 8/9, a cell 28 is defined as a code word corresponding to a data bit. For GCR 8/9, a cell is equal to one data bit. Thus, cells 30 through 41 each correspond to one clock period 42 of clock waveform 45. For a 3 1/2" optical disk rotating at 2,400 revolutions per minute (RPM) with a storage capacity of 256 MBYTES clock period 42 will typically be 63 nanoseconds or a clock frequency of 15.879 MHz. GCR data waveform 47 is the encoded data output from the encoder 12. A representative data sequence is depicted in FIG. 2. The code data sequence 011110100110 is shown in GCR data 50 through 61 where GCR data 50 is a "0". GCR data 51 is a "1". GCR data 52 is a "1" and so forth for GCR data 53 through 61. Pulse GCR waveform 65 is the output from laser pulse means 14 inputted into pulse laser 16. Pulse GCR waveform 65 as shown has not been adjusted in time or duration to reflect performance enhancement for specific data patterns. Pulse GCR 67 through 78 reflect no pulse when the corresponding GCR data 47 is "0" and reflects a pulse when GCR data 47 is a "1". For example, pulse GCR 67 has no pulse because GCR data 50 is a "0". Conversely, pulse GCR 68, 69, 70 and 71 show a laser pulse because GCR data 51 through 54 are a "1" respectively, and similarly for pulse GCR 72 through 78. Under the depicted uniform scenario, pulse GCR pulsewidth 79 is uniform for pulse GCR 68, 69, 70, 71, 73, 76 and 77. For the preferred embodiment this pulsewidth is 35 nanoseconds. Each laser pulse corresponding to pulse GCR waveform 65 creates a recorded pit 80 on optical medium 18. Recorded pit 82 corresponds to pulse GCR 68. Recorded pit 83 corresponds to pulse GCR 69. Similarly, recorded pits 84 through 88 corresponds to pulse GCR 70, 71, 73, 76 and 77, respectively.

Because of thermal dissipation and spot size on the optical medium 18, the recorded pits 80 are wider in time than pulse GCR 65. Successive recorded pits 80 merge together to effectively create a larger recorded pit. Thus the elongated recorded pit has a leading edge corresponding to the first recorded pit and a trailing edge corresponding to the last recorded pit. For example, the pit created by recorded pits 82 through 85 has a leading edge from recorded pit 82 and a trailing edge from pit 85. Under the GCR 8/9 data format, a rising edge corresponds to a "1" while a trailing edge corresponds to a "0". Hence, for data pattern "11110" as shown by GCR data 51 through 55, a rising edge occurs for the first "1" as shown by recorded pit 82, and, at the end of the GCR data 54, a trailing edge occurs as shown by recorded pit 85, because GCR data 55 is a "0".

Playback signal 90 will be low when recorded pit 80 shows no pits. At the leading edge of a pit, playback signal 90 will rise and remain high until the trailing edge of the pit is reached. The signal will go low and remain low until the next pit. For example, playback signal 91 is low because GCR data 47, which is a "0", did not create a pit. At the front edge of recorded pit 82, playback signal 90 has a rising edge as shown in playback signal 92. Playback signal 90 will then remain unchanged until a trailing edge occurs on a recorded pit. For example, because recorded pits 83 and 84 show no trailing edge, playback signal 93 and 94 remains high. The signal remains high during playback signal 95 because of recorded pit 85. However, because GCR data 55 is a "0", recorded pit 85 creates a trailing edge. Thus, playback signal 56 decays. The signal will decay to 0 until a recorded pit occurs creating a rising edge. Thus, with the occurrence of recorded pit 86, which corresponds to GCR data 56 being a "1", playback signal 97 rises. Because there is no immediate successor to recorded pit 86 when GCR data 57 is a "0", playback signal 98 decays. Playback signal 99 remains low because there is no recorded pit when GCR data 58 is a "0". With GCR data 59 and 60 being "1", recorded pits 87 and 88 overlap creating one larger pit. Thus, playback signal 100 rises and playback signal 101 remains high. Playback signal 102 falls at the trailing edge of recorded pit 88 when GCR data 61 is a "0".

For RLL 2,7 a cell consists of two data bits which corresponds to two clock periods 121 of 2F clock waveform 120. For a 256 MBYTE disk, an RLL 2,7 encoding format will require a 2F clock pulse width 121 of 35.4 nanoseconds or a clock frequency of 28.23 MHz. The calculation of this value is straightforward. In order to maintain the same disk density, the GCR 8/9 and RLL 2,7 encoding formats must contain the same amount of information in the same recording time. Because two code bits are required per data bit, the RLL 2,7 format requires a clock frequency twice that of the data bits of the GCR data. The GCR data format records nine bits of code bits per eight bits of data. Thus, the GCR data bit clock is nine-eighths of the clock period 42. Thus, for a GCR clock period 42 of 63 nanoseconds, the RLL 2,7 pulse width 121 must be 35.4 nanoseconds in order to maintain the same disk density.

The RLL 2,7 data waveform 122 reflects two code bits per cell. For example, RLL 2,7 data 124 shows a data pattern "00" while RLL 2,7 data 125 shows a data pattern "01". In this data format, a "1" represents a transition in data. Thus, 2,7 data 125 goes high when the "1" occurs in the data pattern. Similarly, RLL 2,7 data 126 goes low when the "1" occurs in the data pattern. While a "0" occurs RLL 2,7 data 122 remains in the same state. Pulsed 2,7 waveform 137 reflects the pulsing of laser 16 corresponding to RLL 2,7 data 122. Thus, for 2,7 data 125 and 126, during the period when that signal is high, pulsed 2,7 waveform 140 and 141 is high. Because of the thermal elongation of the pit, pulsed 2,7 waveform 141 goes low prior in time to RLL 2,7 data 126. For longer data patterns of "0", the pulsing must remain on. For example, during the data pattern "10001" as shown in RLL 2,7 data 128 and 129, pulsed 2,7 waveform 143 and 144 remains high longer than pulsed 2,7 waveform 140 and 141. For data patterns of successive "0", the pulsed 2,7 waveform 137 can be pulsed as separate pulses. For example, for the data pattern "1000001" RLL 2,7 data 132, 133 and 134 can be pulsed in two separate pulses as shown in pulse 2,7 147, 148 and 149.

As with the GCR 8/9 format, recorded pit 160 shows thermal elongation. For example, recorded pit 162 is wider in time than the pulse from pulsed 2,7 waveform 140 and 141; similarly for recorded pit 163. Physical limitations of existing lasers and optical disks prevent recorded pit 163 from being recorded in two successive pulses at 2F clock 120 frequency. Thus, for these intermediate size pits, the thermal accumulation distortion effects will be greater than in either recorded pit 162 or the combined recorded pits 164 and 165. Again, playback signal 167 depicted by playback signal 168 through 174 goes high on leading edges of recorded pits 160, decays on trailing edges of recorded pits 160 and remains constant during the presence or absence of pits.

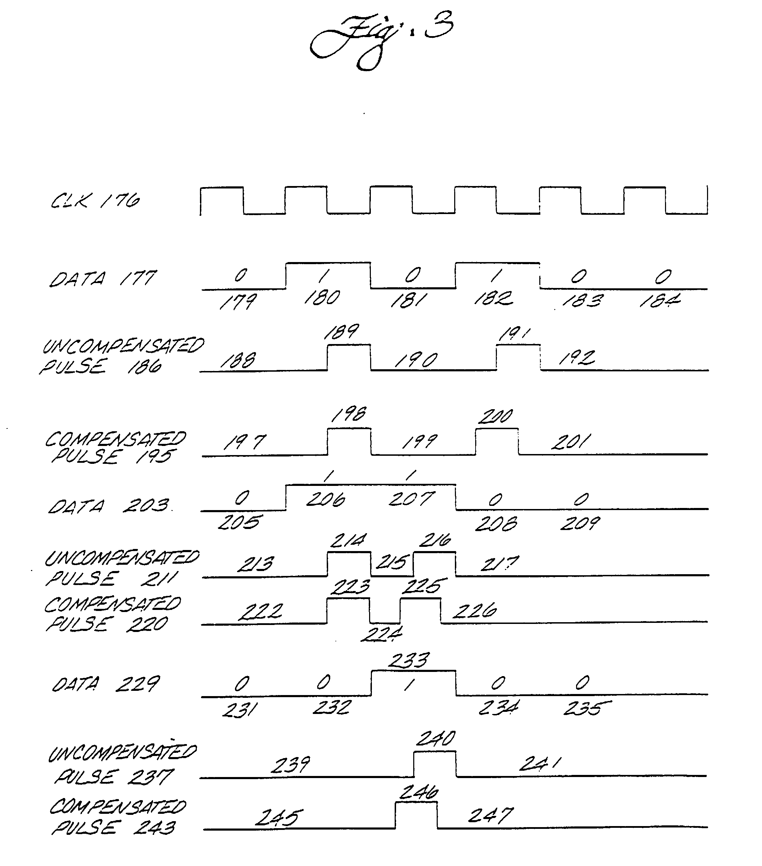

The pulsed GCR code can be improved by correcting predictable position shifts. FIG. 3 shows the timing 20 diagram for the write compensation of the laser pulse generator 14. Experimental testing showed that recording early when the laser 16 is off for two bits or greater enhances performance. Clock waveform 176 is the code bit clock used for clocking data 177, 203 and 229 which show the worst case data patterns for enhancement. Other patterns can be corrected but will suffer in signal amplitude. Data 180 through 184 corresponds to the data sequence "10100". The uncompensated pulse waveform 188 through 192 corresponds to this data pattern without write compensation. Uncompensated pulse waveform 189 and 191 occur in the second half of the clock period. After write compensation, the output of laser pulse generator 14 corresponds to compensated pulse waveform 195 where compensated pulse waveforms 197 and 198 remains unchanged and a shortened off-period for compensated pulse waveform 199 provides an earlier compensated pulse waveform 200. During compensated pulse 201, laser 16 remains off for a longer duration than uncompensated pulse 192. Similarly for data 206 through 209 corresponding to data pattern "1100" uncompensated pulse waveform 211 would be off for uncompensated pulse waveform 213 followed by two pulses uncompensated pulse waveforms 214 and 216. Again, the write compensation circuit adjusts compensated pulse wave form 220 so that compensated pulse waveform 225 will occur closer in time to compensated pulse waveform 223 so that compensated pulse waveform 224 is shorter than uncompensated pulse waveform 215. Finally, data 231 through 235 corresponding to the data pattern "00100" has uncompensated pulse waveform 237 occurring at uncompensated pulse waveform 240. Write compensation would move compensated pulse waveform 243 earlier in time to compensated pulse waveform 246.

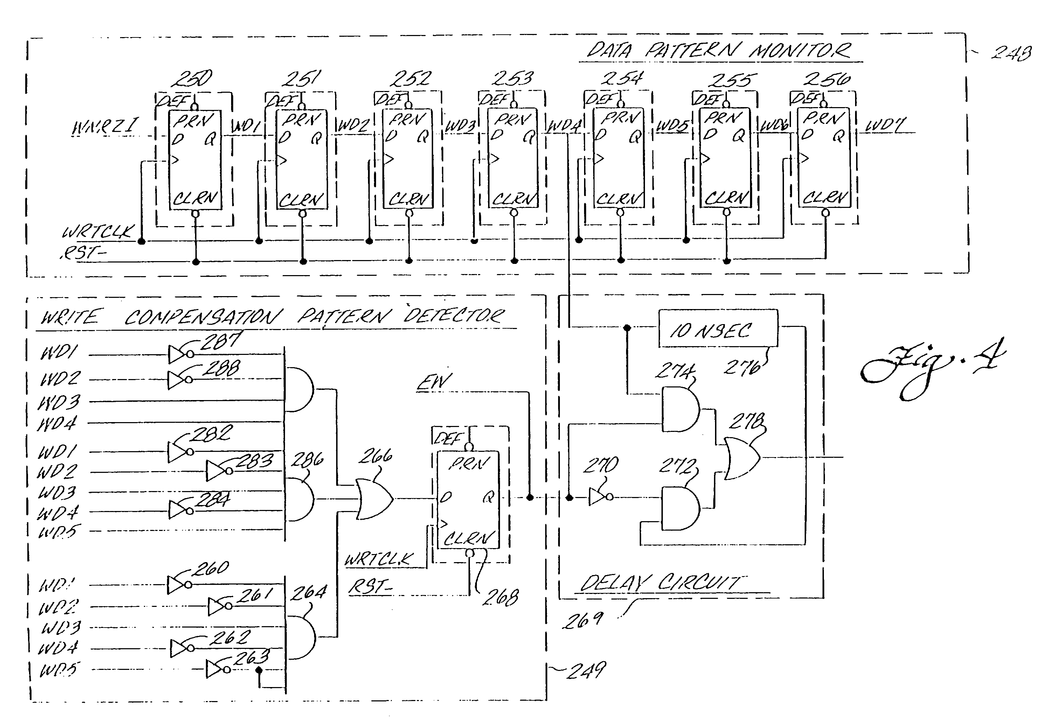

FIG. 4 shows the schematic diagram of the write compensation circuit which comprises data pattern monitor 248, write compensation pattern detector 249 and delay circuit 269. Data pattern monitor 248 is a serial shift register that sequentially clocks encoded data from encoding means 12. The last six clocked in data bits are sent to write compensation pattern detector 249 where they are analyzed for determining whether to pulse the laser earlier than normal.

Data pattern monitor 248 consists of data sequence D flip flops 250 through 256. Encoded data is input into the D port of data sequence D flip flop 250 whose Q output WD1 becomes the input of the D port of data sequence D flip flop 251. This clocking continues through data sequence D flip flops 252 through 256 whose Q output WD7 is the data sequence delayed by seven clock periods from when it was first input into data pattern monitor 248. The Q outputs, WD1, WD2, WD3, WD4, and WD5 of data sequence D flip flops 250 through 255, respectively, represent the last six of the last seven data bits inputted into a data pattern monitor 248. These six bits are sent to a write compensation pattern detector 249 where they are compared to predetermined data patterns, and, if they match, an enable write signal is sent to a delay circuit 269 to indicate that the laser pulse is to occur earlier than normal.

The first data pattern is detected by inverting the Q data WD1, WD2, WD3, and WD4 from data sequence D flip flops 250, 251, 253 and 254 through data inverters 260, 261, 262 and 263 respectively. The output of these inverters is AND'd with the output from data sequence D flip flop 252 in detect AND gate 264. Thus when a sequence "00100" occurs, the output of detect AND gate 264 goes high indicating that a detect of the data pattern occurred. Similarly, the second data pattern is detected by inverting the Q output WD2, WD2, and WD4 from data sequence D flip flops 250, 251, and 253 through the data inverters 282, 283, and 284 respectively and ANDing with the outputs, WD4 and WD6 of data sequence D flip flops 252 and 254 in detect AND gate 286. Thus, a data pattern of "010100" will trigger a high from detect AND gate 286 indicating a detect. The third data sequence is detected by inverting the Q output WD1 and WD2 from data sequence D flip flops 250 and 251 through data inverters 287 and 288 and ANDing with the Q output WD3 and WD4 from data sequence D flip flops 252 and 253 in data detect AND gate 289. Thus the data pattern of "1100" will trigger a detect from detect AND gate 289 indicating the presence of the data. The data pattern detect output of detect AND gates 264, 286 and 289 is OR'd in detected pattern OR gate 266 whose output goes high when one of the three data patterns is detected. The detected pattern output is clocked in enable write D flip flop 268 where Q output, enable write signal, is then sent to delay circuit 269.

Delay circuit 269 takes the clocked data output WD4 of data sequence D flip flop 253 and simultaneously inputs it into delay line 276 and not delay select AND gate 274. The delayed output of delay line 276 is inputted into delay select AND gate 272. The enable write signal from write compensation pattern detector 249 will enable either delay select AND gate 272 or not delay select AND gate 274. When the enable write signal is low which indicates that one of the three data patterns has not occurred, it is inverted by enable write inverter 270. This allows the delayed data from delay line 276 to be clocked. On the other hand, if enable write is high, which indicates that one of the three data patterns has occurred, then the not delay select AND gate 274 allows the transmission of the data from data sequence D flip flop 253 which is undelayed. The output from delay select AND 272 and not delay select AND gate 274 is OR'd in data OR gate 278 where it is outputted from delay circuit 269. Although prior discussions about the write compensation circuit or timing indicated that for the three data patterns, the write pulse would occur 10 nanoseconds earlier, in actual implementation, data is delayed 10 nanoseconds for all data but the three data patterns. The delay of delay circuit 276 is set between 8 to 12 nanoseconds for the frequency of the preferred embodiment.

When recording lower frequency data patterns, the resultant magneto-optical signal has a slower rise time than fall time. This causes the final output from the waveform processor 22 to have degraded amplitude on positive peaks which can be corrected by recording with higher effective power at the leading edge of the data pattern. For the preferred embodiment, the data pattern "000111" will trigger a wide write signal during the second "1" of the data pattern thereby pulsing the laser during its normal off period.

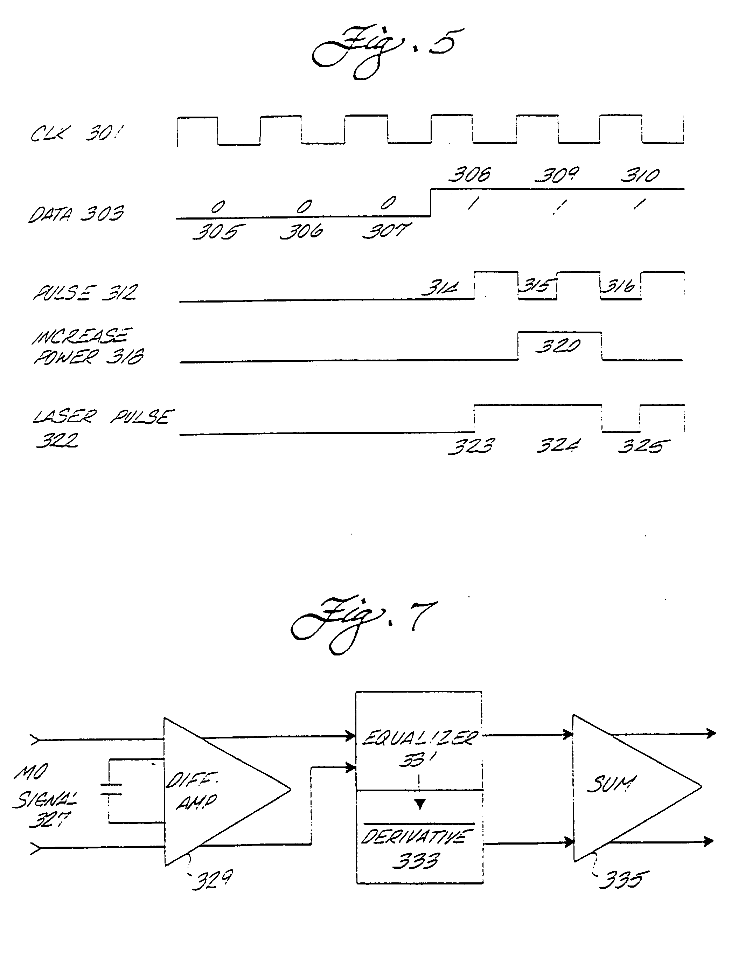

In FIG. 5, clock waveform 301 clocks data waveform 303 through the laser pulse greater 14 for the data pattern "000111". As depicted by data 305 through 310, the laser pulse generator 14 generates pulse waveform 312 with pulses 314, 315 and 316 when data waveform 303 is a "1". During the second "1" of this data pattern, the laser pulse generator 14 will turn on for the increase power waveform 318 and generate a pulse 320. The output laser pulse waveform 322 results from the OR of pulse 312 and turn on for the increase power waveform 318 that creates laser pulses 323, 324 and 325. Under normal operations, laser pulse 324 would be off during the first half of the clock period. However, under this particular data pattern, keeping the laser on for the laser pulses 323 and 324, effectively increases the power fifty percent during this time period.

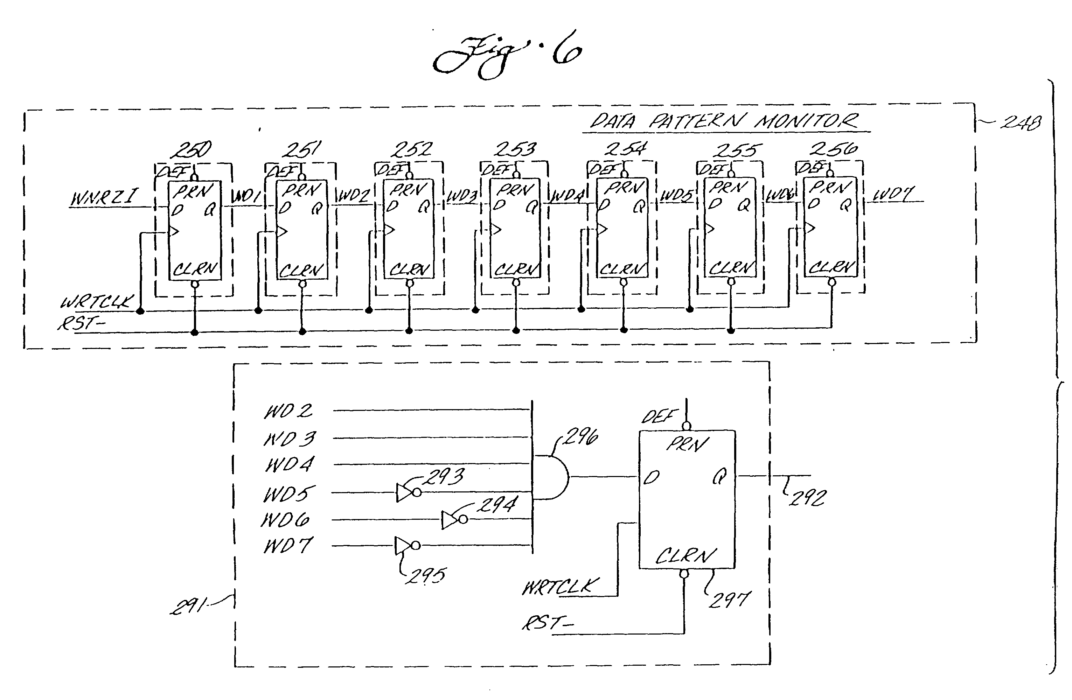

In FIG. 6, amplitude asymmetry correction circuit 291 generates the write wide pulse 292 which will be OR'd with the laser pulse output from delay circuit 269 in laser pulse OR gate 280 resulting in laser pulse waveform 322. The data pattern monitor 248 operates as shown in FIG. 4. The Q outputs WD1, WD2, WD3, WD4, WD5, WD6 and WD7 of data sequence D flip flops 251 through 256 are inputted into the amplitude asymmetry correction circuit 291 where the outputs WD5, WD6, and WD7 of data sequence D flip flops 254, 255 and 256 are inverted in data inverters 293, 294 and 295 respectively. The outputs of data inverters 293, 294 and 295 and data sequence D flip flops 251, 252 and 253 are AND'd in detect AND gate 296. The output of detect AND gate 296 indicates a detected pattern form "000111" which will be clocked out of write wide D flip flop 297 at the next clock 301.

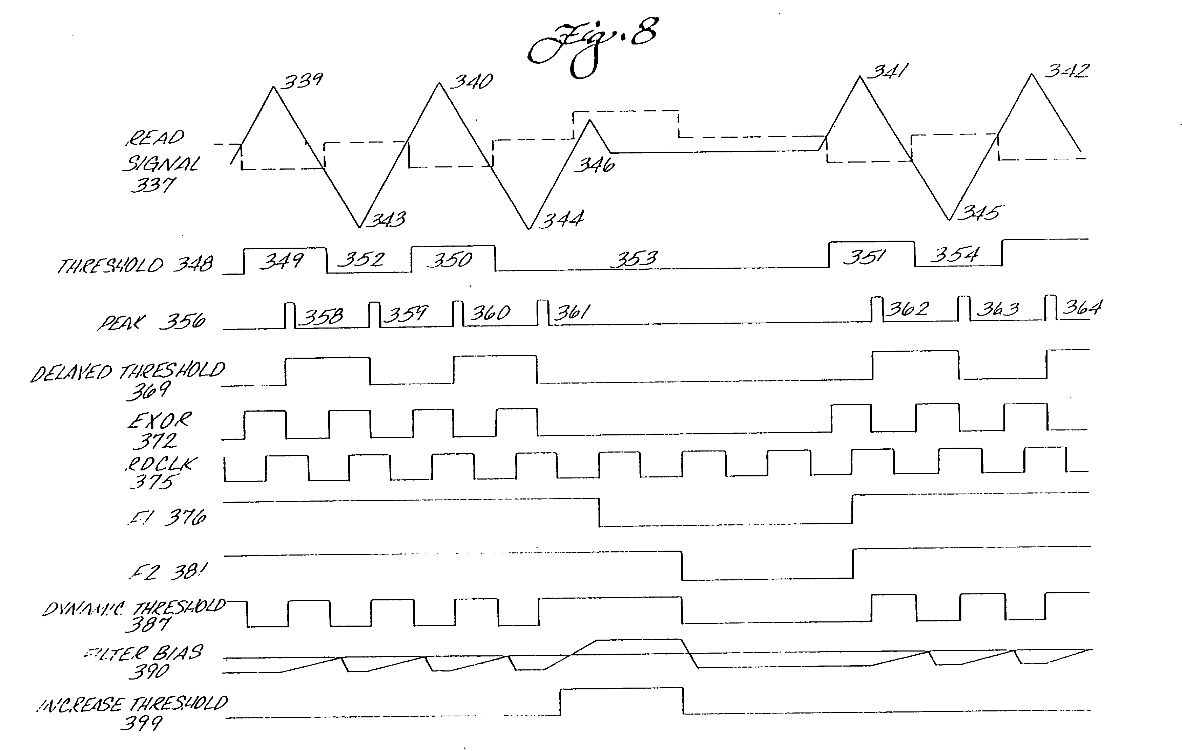

The waveform output of the optical reader 20 will be degraded as a function of frequency and data pattern. Amplitude and timing can be enhanced by processing the signal through the waveform processor 22. The asymmetry of the rise and fall times of an isolated pulse can be improved by summing an equalized differentiated signal with its derivative. In FIG. 7, magneto-optical signal 327 is differentiated by a differential amplifier 329. The differentiated signal is inputted into an equalizer 331 where it is equalized by 5 dB in the preferred embodiment and the amplitude is equalized as a function of frequency. The derivative of the equalized signal is taken by a derivative processor 333 and summed with the equalized signal in an adder 335. The output of the adder 335 is the read signal 337.

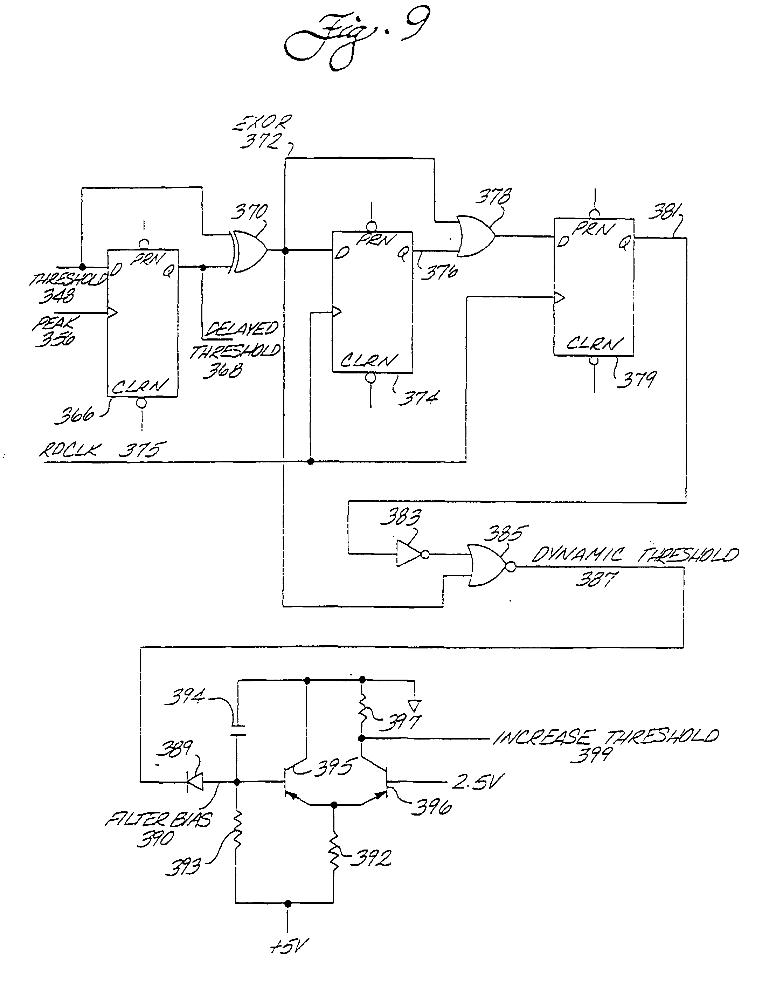

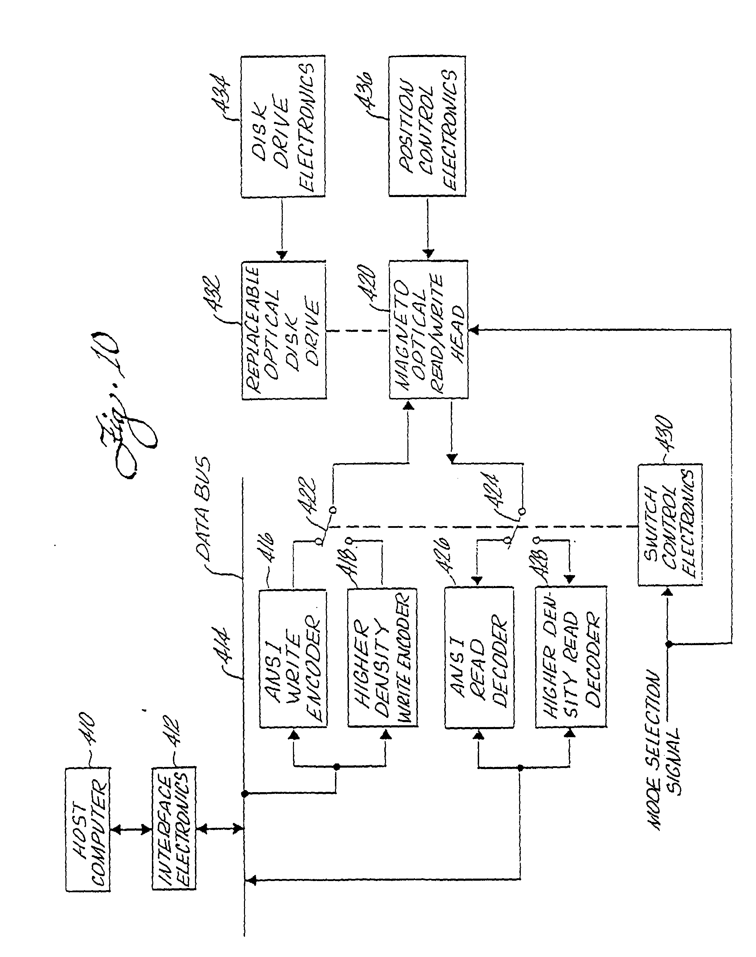

FIG. 8 shows the timing diagram for the dynamic threshold circuit shown in FIG. 9.

Read signal 337 will contain an overshoot produced by the pulse slimming. Because this overshoot is predictable, the threshold for the read circuitry can be increased during the overshoot to prevent false data reads during positive peaks 339, 340, 341 and 342, and during negative peaks 343, 344 and 345 of read signal 337. Threshold waveform 348 is switched high during positive peaks. Threshold waveforms 349, 350 and 351 are high during positive peaks 339, 340 and 341. Threshold waveforms 352, 353 and 354 are low during negative peaks 343, 344, and 345. Each peak, whether positive or negative, of the read signal 337 generates peak waveform 356 which is a short clocking pulse that occurs shortly after the read signal 337 peaks. Peak waveforms 339, 343, 340, 344, 341, 345 and 342 of the read signal 337 generate peak waveforms 358 through 364, respectively.

Threshold waveform 348 is inputted into the D port of threshold delay D flip flop 366. Peak waveform 356 clocks threshold waveform 348 through this flip flop. Delayed threshold waveform 368 is the Q output of threshold delay D flip flop 366 which is exclusively OR'd with threshold 348 in threshold-exclusive OR gate 370. The EXOR signal 372 is the output of threshold exclusive OR gate 370. The EXOR signal 372 has twice the frequency of the original threshold waveform 348. The EXOR signal 372 is inputted into the D port of EXOR D flip flop 374 where it is clocked at read clock 375. F1 waveform 376 is the Q output of EXOR D flip flop 374. Read clock waveform 375 has a leading edge during high pulses of EXOR signal 372, except when EXOR signal 372 is low for more than one read clock waveform 375. Thus, the F1 waveform 376 is high except for the time between the first read clock 375 pulse after the EXOR signal 372 is low for more than one read clock 375 and the next EXOR signal 372 pulse.

F1 waveform 376 is OR'd with the EXOR signal 372 in envelope OR gate 378. The output of envelope OR gate 378 is high except for the time from the first read clock 375 after the EXOR signal 372 has been low for more than one clock period until the signal 372 goes high again. The output of envelope OR gate 378 is clocked through the D input of envelope D flip flop 379 which is clocked by read clock 375. The Q output of the envelope D flip flop 379 is F2 waveform 381. The F2 waveform 381 is high except from the second read clock 375 period after the EXOR signal 372 goes low until the next read clock 375 clocks a high for the EXOR signal 372. The F2 waveform 381 is inverted through the F2 inverter 383 and NOR'd with the EXOR signal 372 in dynamic threshold NOR gate 385 to produce the dynamic threshold waveform 387. The dynamic threshold waveform 387 is high any time the EXOR signal 372 is low except when the F2 waveform 381 is low. Thus, the dynamic threshold waveform 387 has an on-time less than a half read clock 375 period except when the EXOR signal 372 is low on the next read clock 375 period. For this exception, the dynamic threshold waveform 387 stays high from the end of the EXOR signal 372 until the second read clock 375 pulse.

The Dynamic threshold waveform 387 is used to forward or reverse bias a biasing diode 389. When dynamic threshold 387 is high, biasing diode 389 is reverse biased. Conversely, when the dynamic threshold waveform 387 is low, the biasing diode 389 is forward biased.

When the dynamic threshold waveform 387 forward biases the biasing diode 389, the potential of the filter bias signal 390 is higher by the junction voltage of the biasing diode 389. This potential is 0.6 volts for standard devices. The 5-volt supply voltage drops across the limiting resistor 393 to the potential of the filter bias signal 390, because the voltage across the charging capacitor 394 is the difference between the filter bias signal 390 and ground. The charging capacitor charges up to this potential which is also the base voltage of a transistor 395. This turns on the transistor 395, causing the voltage drop across a limiting resistor 392 to be almost 5 volts. Because the emitters of the transistors 395 and 396 are connected, the emitter voltage of the transistor 396 is less than the 2.5-volt base voltage of the transistor 396. Accordingly, the transistor 396 is off so that the collector voltage across the collector resistor 397 produces an increase threshold waveform 399 which is low. The increase threshold waveform 399 is the signal that increases the threshold of the read signal 377 detector during periods of overshoot.

When the dynamic threshold waveform 387 is high, the biasing diode 389 is reversed biased, thereby no longer grounding the base of the transistor 395. When the dynamic threshold waveform 387 goes high, the charging capacitor 394 starts charging, creating a potential at the base of the transistor 395 that will rise exponentially up to the supply voltage, 5 volts. As the filter bias signal 390 rises in voltage, the voltage at the emitter of the transistor 395 increases which equally increases the emitter voltage of the transistor 396. When this emitter voltage exceeds the base voltage by the junction potential across the emitter-to-base junction, the transistor 396 is turned on. Turning on the transistor 396 causes the increase threshold waveform 399 to go high.

Under normal operations, the dynamic threshold waveform 387 is pulsed as described above. During normal read signals, the dynamic threshold 387 is on for a period equivalent to the on-period of read clock 375. The charge time for the voltage across the charging capacitor 394 to exceed the base voltage of 2.5 volts is longer than this half clock period of time. Thus, under normal circumstances, the increase threshold waveform 399 remains low. However, during periods of overshoot, the dynamic threshold waveform 399 is on for a longer period of time, thereby allowing the charging capacitor 394 to charge to a voltage that exceeds 2.5 volts, thereby triggering the increase threshold waveform 399 to go high.

In FIG. 10, a host computer 410 which serves as a source and utilizer of digital data is coupled by interface electronics 412 to a data bus 414. As host computer 410 processes data, and it wants to access external memory from time to time, a connection is established through interface electronics 412 to data bus 414. Data bus 414 is coupled to the input of a write encoder 416 and the input of a write encoder 418. Preferably, write encoder 16 encodes data from bus 414 in a low density, i.e. ANSI format and write encoder 418 encodes data from data bus 414 in a higher density format. The Draft Proposal for 90 MM Rewriteable Optical Disk Cartridges for Information Interchange, dated 1 January 1991 describes the ANSI format. The outputs of write encoders 416 and 418 are coupled alternatively through a switch 422 to the write input of a magneto optical read/write head 420. The read output of head 420 is coupled alternatively through a switch 424 to the inputs of a read decoder 426 and a read decoder 428. Read decoder 426 decodes data in the same format, i.e. ANSI, as write encoder 416, and read decoder 428 decodes data in the same format as write encoder 418. Preferably, the encoding and decoding technique disclosed above is employed to implement write encoder 418 and read decoder 428. The outputs of encoders 426 and 428 are connected to data bus 414.

Responsive to a mode selection signal, switch control electronics 430 sets the states of switches 422 and 424 into either a first mode or a second mode. In the first mode, write encoder 418 and read decoder 428 are connected between data bus 414 and read/write head 420. In the second mode, write encoder 416 and read decoder 426 are connected between data bus 414 and read/write head 420. Read/write head 420 reads encoded data from and writes encoded data to a 490 millimeter optical disk received by a replaceable optical disk drive 432, which is controlled by disk drive electronics 434. Read/write head 420 is transported radially across the surface of the disk received by disk drive 432 by position control electronics 436.

When a 90 millimeter disk in a high density format is received by disk drive 432, a mode selection signal sets the system in the first mode. As a result, data from host computer 410, to be stored on the disk, is organized by interface electronics 412 and encoded by write encoder 418, while data read from the disk is decoded by read decoder 428, reorganized by interface electronics 412 and transmitted to host computer 410 for processing.

When a 90 millimeter disk in the low density ANSI format is received by disk drive 432, a mode selection signal sets the system in the second mode. As a result, data from host computer 410 , to be stored on the disk, is organized by interface electronics 412 and encoded by write encoder 416, while data read from the disk is decoded by read decoder 426, reorganized by interface electronics 412 and transmitted to host computer 410 for processing.

In certain cases, it may be desirable to modify the laser for the first and second modes. For example, different laser frequencies could be used or different laser focussing lens systems could be used for the different modes. In such case, the mode selection signal is also coupled to read/write head 420 to control the conversion between frequencies or optical lens focussing systems, as the case may be.

It is preferable to organize the data stored in both formats to have the same number of bytes per sector, i.e., in the case of ANSI, 512 bytes. In such case, the same interface electronics 412 can be used to organize the data stored and retrieved from the disks in both formats.

In accordance with the invention, the same read/write head, position control electronics, optical disk drive, disk drive electronics, interface electronics and data bus can be employed to store data on and retrieve data from optical disks in different formats. As a result, downward compatibility from higher density formats that are being developed as the state of the art advances, to the industry standard ANSI format can be realized using the same equipment.

## Claims

1. A method for storing data on an optical medium, said method comprising the steps of :
converting binary data words to binary code words in which encoded bits have first and second binary values at a predefined clock interval ;
generating, during each clock interval in which said encoded bits have said first binary value, energizing pulses having a uniform duration less than said clock interval;
monitoring said encoded bits to detect an occurrence of any of a first predefined set of encoded bit patterns ;
shifting selected ones of said energizing pulses earlier in time with respect to the data in response to detecting any one of said encoded bit patterns of said first predefined set;
monitoring said encoded bits to detect an occurrence of any of a second predefined set of encoded bit patterns ;
in response to detecting any one of said encoded bit patterns of said second predefined set, extending one of said energizing pulses ; and
turning a laser (16) on and off in response to said energizing pulses and recording indicia on an optical medium(18) thereby.

2. The method according to claim 1 wherein said step of recording indicia further comprises the step of applying a magnetic field to a magneto-optical disk.

3. The method according to claims 1 and 2 wherein said first predefined set of encoded bit patterns includes a pattern of two consecutive encoded bits having said second binary value.

4. The method according to claim 3 wherein said first binary value corresponds to a 1 and said second binary value corresponds to a 0, and wherein said first predefined set of encoded bit patterns comprises 1100, 10100 and 00100.

5. The method according to claims 1 to 4 wherein said first binary value corresponds to a 1 and said second binary value corresponds to a 0, and wherein said second predefined set of encoded bit patterns comprises 000111.

6. An apparatus for storing data on an optical medium, comprising :
an encoder (12) for converting binary data words to binary code words in which encoded bits have first and second binary values at a predefined clock interval;
a pulse generator (14) for generating, during each clock interval in which said encoded bits have said first binary value, energizing pulses having a uniform duration less than said clock interval;
a first data monitor (248) coupled to said encoded bits and capable of detecting an occurrence of any of a first predefined set of encoded bit patterns;
means for shifting (269) earlier in time selected ones of said energizing pulses in response to detecting any one of said encoded bit patterns of said first predefined set;
a second data monitor coupled to said encoded bits capable of detecting an occurrence of any of a second predefined set of encoded bit patterns;
means for lengthening a duration of at least one of said energizing pulses in response to detecting any one of said encoded bit patterns of said second predefined set; and
means for turning a laser on and off in response to said energizing pulses so as to record on an optical medium.

7. The apparatus according to claim 6 wherein said first predefined set of encoded bit patterns includes a pattern of two consecutive encoded bits having said second binary value.

8. The apparatus according to claim 7 wherein said first binary value corresponds to a 1 and said second binary value corresponds to a 0, and wherein said first predefined set of encoded bit patterns comprises 1100, 10100 and 00100.

9. The apparatus according to claims 6 to 8 wherein said first binary value corresponds to a 1 and said second binary value corresponds to a 0, and wherein said second predefined set of encoded bit patterns comprises 000111.

10. An apparatus for storing data on an optical medium, comprising :
an encoder for converting binary data words to binary code words in which encoded bits have first and second binary values at a predefined clock interval;
a pulse generator responsive to said encoded bits, wherein energizing pulses having a uniform duration less than said clock interval are generated during each clock interval in which said encoded bits have said first binary value ;
a first data monitor (248) receiving as an input said encoded bits and detecting an occurrence of any of a first predefined set of encoded bit patterns ;
a write compensation circuit (249) capable of shifting selected energizing pulses earlier in time in response to an output of said first data monitor ;
a second data monitor receiving as an input said encoded bits and detecting an occurrence of any of a second predefined set of encoded bit patterns and capable of extending at least one of said energizing pulses in response thereto ; and
means for turning a laser on and off in response to said energizing pulses so as to record on an optical medium.

11. The apparatus according to claim 10 wherein said first binary value corresponds to a 1 and said second binary value corresponds to a 0, and wherein said first predefined set of encoded bit patterns comprises 1100, 10100 and 00100.

12. The apparatus according to claims 10 and 11 wherein said first binary value corresponds to a 1 and said second binary value corresponds to a 0, and wherein said second predefined set of encoded bit patterns comprises 000111.

13. An apparatus for storing data on an optical medium, said apparatus comprising :
an encoder (13) for converting binary data words to binary code words in which encoded bits have first and second binary values at a predefined clock interval;
a pulse generator (14) responsive to said encoded bits so that energizing pulses having a uniform duration less than said clock interval are generated during each clock interval in which said encoded bits have said first binary value;
a first data monitor (248) receiving as an input said encoded bits and detecting an occurrence of consecutive encoded bits having said second binary value;
a write compensation circuit (249) capable of shifting selected energizing pulses earlier in time in response to an output of said first data monitor ;
a second data monitor receiving as an input said encoded bits detecting as occurrence of an encoded bit pattern indicative of a low frequency component and capable of extending at least one of said energizing pulses in response thereto ; and
means for turning a laser on and off in response to said energizing pulses to thereby record on an optical medium.

14. The apparatus according to claim 14 wherein said first binary value corresponds to a 1 bit and said second binary value corresponds to a 0 bit, and wherein said set of encoded bit patterns includes 000111.

## Patentansprüche

1. Verfahren zum Speichern von Daten auf einem optischen Medium, wobei das Verfahren die Schritte enthält:
Konvertieren binärer Datenwörter zu binären Codewörtern, in denen codierte Bits erste und zweite binäre Werte in einem vordefinierten Taktintervall aufweisen;
Erzeugen von Erregerimpulsen mit einer gleichmäßigen Dauer, die geringer als das Taktintervall ist, während jedem Taktintervall, in welchem die codierten Bits den ersten binären Wert aufweisen;
Überwachen der codierten Bits, um das Auftreten von irgend einem aus einem ersten vordefinierten Satz von codierten Bitmustern zu erfassen;
Verschieben ausgewählter der Erregerimpulse auf einen früheren Zeitpunkt hinsichtlich der Daten im Ansprechen auf die Erfassung von irgend einem der codierten Bitmuster des ersten vordefinierten Satzes;
Überwachen der codierten Bits, um das Auftreten von irgend einem aus einem zweiten vordefinierten Satz von codierten Bitmustern zu erfassen;
Verlängern von einem der Erregerimpulse im Ansprechen auf die Erfassung von irgend einem der codierten Bitmuster des zweiten vordefinierten Satzes; und
Ein- und Ausschalten eines Lasers (16) im Ansprechen auf die Erregerpulse und hierdurch Aufzeichnen von Indizes auf ein optisches Medium (18).

2. Verfahren nach Anspruch 1, wobei der Schritt des Aufzeichnens von Indizes ferner den Schritt der Aufbringung eines magnetischen Feldes auf eine magneto-optische Platte enthält.

3. Verfahren nach den Ansprüchen 1 und 2, wobei der erste vordefinierte Satz von codierten Bitmustern ein Muster mit zwei aufeinander folgenden codierten Bits enthält, die den zweiten binären Wert aufweisen.

4. Verfahren nach Anspruch 3, wobei der erste binäre Wert einer 1 und der zweite binäre Wert einer 0 entspricht, und wobei der erste vordefinierte Satz von codierten Bitmustern 1100,10100 und 00100 enthält.

5. Verfahren nach den Ansprüchen 1 bis 4, wobei der erste binäre Wert einer 1 und der zweite binäre Wert einer 0 entspricht, und wobei der zweite vordefinierte Satz von codierten Bitmustern 000111 enthält.

6. Vorrichtung zum Speichern von Daten auf einem optischen Medium, mit:
einem Codierer (12) zum Konvertieren von binären Datenwörtern zu binären Codewörtem, in denen codierte Bits erste und zweite binäre Werte in einem vordefinierten Taktintervall aufweisen;
einem Impulsgenerator (14) zum Erzeugen von Erregerimpulsen mit einer gleichmäßigen Dauer, die geringer als das Taktintervall ist, während jedem Taktintervall, in welchem die codierten Bits den ersten binären Wert aufweisen;
einem ersten Datenkontrollempfänger (248), der mit den codierten Bits gekoppelt ist und zur Erfassung eines Auftretens von irgend einem aus einem ersten vordefinierten Satz von codierten Bitmustern in der Lage ist;
einer Einrichtung (269) zum Verschieben von Ausgewählten der Erregerimpulse zu einem früheren Zeitpunkt im Ansprechen auf das Erfassen von irgend einem der codierten Bitmuster des ersten vordefinierten Satzes;
einem zweiten Datenkontrollempfänger, der mit den codierten Bits gekoppelt ist und zur Erfassung eines Auftretens von irgend einem aus einem zweiten vordefinierten Satz von codierten Bitmustern in der Lage ist;
einer Einrichtung zum Verlängern einer Dauer von wenigstens einem der Erregerimpulse im Ansprechen auf die Erfassung von irgend einem der codierten Bitmuster des zweiten vordefinierten Satzes; und
einer Einrichtung zum Ein- und Ausschalten eines Lasers im Ansprechen auf die Erregerimpulse, um auf einem optischen Medium aufzuzeichnen.

7. Vorrichtung nach Anspruch 6, wobei der erste vordefinierte Satz von codierten Bitmustem ein Muster mit zwei aufeinander folgenden codierten Bits enthält, die den zweiten binären Wert aufweisen.

8. Vorrichtung nach Anspruch 7, wobei der erste binäre Wert einer 1 und der zweite binäre Wert einer 0 entspricht, und wobei der erste vordefinierte Satz von codierten Bitmustern 1100, 10100 und 00100 enthält.

9. Vorrichtung nach den Ansprüchen 6 bis 8, wobei der erste binäre Wert einer 1 und der zweite binäre Wert einer 0 entspricht, und wobei der zweite vordefinierte Satz von codierten Bitmustern 000111 enthält.

10. Vorrichtung zum Speichern von Daten auf einem optischen Medium, mit:
einem Codierer zum Konvertieren von binären Datenwörtern zu binären Codewörtern, in welchen die codierten Bits erste und zweite binäre Werte in einem vordefinierten Taktintervall aufweisen;
einem Impulsgenerator, der auf die codierten Bits anspricht, wobei Erregerimpulse mit einer gleichmäßigen Dauer geringer als das Taktintervall während jedem Taktintervall erzeugt werden, in welchem die codierten Bits den ersten binären Wert aufweisen;
einem ersten Datenkontrollempfänger (248), der als Eingabe die codierten Bits empfängt und ein Auftreten von irgend einem aus einem ersten vordefinierten Satz von codierten Bitmustem erfaßt;
einer Schreibkompensationsschaltung (249), die zum Verschieben von ausgewählten Erregerimpulsen zu einem früheren Zeitpunkt im Ansprechen auf eine Ausgabe des ersten Datenkontrollempfängers in der Lage ist;
einen zweiten Datenkontrollempfänger, der als eine Eingabe die codierten Bits empfängt und ein Auftreten von irgend einem aus einem zweiten vordefinierten Satz von codierten Bitmustern erfaßt, und zur Verlängerung von wenigstens einem der Erregerimpulse im Ansprechen hierauf in der Lage ist; und
einer Einrichtung zum Ein- und Ausschalten eines Lasers im Ansprechen auf die Erregerimpulse, um auf einem optischen Medium aufzuzeichnen.

11. Vorrichtung nach Anspruch 10, wobei der erste binäre Wert einer 1 und der zweite binäre Wert einer 0 entspricht, und wobei der erste vordefinierte Satz von codierten Bitmustern 1100, 10100 und 00100 enthält.

12. Vorrichtung nach den Ansprüchen 10 und 11, wobei der erste binäre Wert einer 1 und der zweite binäre Wert einer 0 entspricht, und wobei der zweite vordefinierte Satz von codierten Bitmustern 000111 enthält.

13. Vorrichtung zum Speichern von Daten auf einem optischen Medium, wobei die Vorrichtung enthält:
einen Codierer (13) zum Konvertieren von binären Datenwörtern zu binären Codewörtern, in welchen codierte Bits erste und zweite binäre Werte in einem vordefinierten Taktintervall aufweisen;
einen Impulsgenerator (14), der auf die codierten Bits derart anspricht, daß Erregerimpulse mit einer gleichmäßigen Dauer geringer als das Taktintervall während jedem Taktintervall erzeugt werden, in welchem die codierten Bits den ersten binären Wert aufweisen;
einen ersten Datenkontrollempfänger (248), der als eine Eingabe die codierten Bits empfängt und ein Auftreten von aufeinanderfolgenden codierten Bits mit dem zweiten binären Wert erfaßt;
eine Schreibkompensationsschaltung (249), die zum Verschieben von ausgewählten Erregerimpulsen zu einem früheren Zeitpunkt im Ansprechen auf eine Ausgabe des ersten Datenkontrollempfängers in der Lage ist;
einen zweiten Datenkontrollempfänger, der als eine Eingabe die codierten Bits empfängt und ein Auftreten eines codierten Bitmusters erfaßt, welches anzeigend für eine Niedrigfrequenzkomponente ist, und der zum Verlängern von wenigstens einem der Erregerimpulse im Ansprechen hierauf in der Lage ist; und
eine Einrichtung zum Ein- und Ausschalten eines Lasers im Ansprechen auf die Erregerimpulse, um hierdurch auf einem optisches Medium aufzuzeichnen.

14. Vorrichtung nach Anspruch 13, wobei der erste binäre Wert einem 1-Bit und der zweite binäre Wert einem 0-Bit entspricht, und wobei der Satz von codierten Bitmustern 000111 enthält.

## Revendications

1. Procédé pour mémoriser des données sur un support optique, ledit procédé comportant les étapes consistant à :
convertir des mots de données binaires en mots de code binaire dans lesquels des bits codés ont des première et seconde valeurs binaires à un intervalle d'horloge donné,
générer, pendant chaque intervalle d'horloge dans lequel lesdits bits codés ont ladite première valeur binaire, des impulsions d'excitation ayant une durée uniforme inférieure audit intervalle d'horloge,
surveiller lesdits bits codés pour détecter l'apparition d'un quelconque motif d'un premier ensemble prédéfini de motifs de bits codés,
décaler des impulsions sélectionnées parmi lesdites impulsions d'excitation plus tôt dans le temps par rapport aux données en réponse à la détection de l'un quelconque desdits motifs de bits codés dudit premier ensemble prédéfini,
surveiller lesdits bits codés pour détecter l'apparition d'un quelconque motif d'un second ensemble prédéfini de motifs de bits codés,
en réponse à la détection de l'un quelconque desdits motifs de bits codés dudit second ensemble prédéfini, étendre l'une desdites impulsions d'excitation, et
activer et désactiver un laser (16) en réponse auxdites impulsions d'excitation et enregistrer ainsi des indices sur un support optique (18).

2. Procédé selon la revendication 1, dans lequel ladite étape d'enregistrement d'indices comporte de plus l'étape consistant à appliquer un champ magnétique à un disque magnéto-optique.

3. Procédé selon les revendications 1 et 2, dans lequel ledit premier ensemble prédéfini de motifs de bits codés inclut un motif de deux bits codés consécutifs ayant ladite seconde valeur binaire.

4. Procédé selon la revendication 3, dans lequel ladite première valeur binaire correspond à un 1 et ladite seconde valeur binaire correspond à un 0, et dans lequel ledit premier ensemble prédéfini de motifs de bits codés inclut 1100, 10100 et 00100.

5. Procédé selon les revendications 1 à 4, dans lequel ladite première valeur binaire correspond à un 1 et ladite seconde valeur binaire correspond à un 0, et dans lequel ledit second ensemble prédéfini de motifs de bits codés inclut 000111.

6. Dispositif pour mémoriser des données sur un support optique, comportant:
un codeur (12) pour convertir des mots de données binaires en mots de code binaire dans lesquels des bits codés ont des première et seconde valeurs binaires à un intervalle d'horloge prédéfini,
un générateur d'impulsions (14) pour générer, pendant chaque intervalle d'horloge dans lequel lesdits bits codés ont ladite première valeur binaire, des impulsions d'excitation ayant une durée uniforme inférieure audit intervalle d'horloge,
un premier dispositif de surveillance de données (248) relié auxdits bits codés et capable de détecter l'apparition d'un quelconque motif parmi un premier ensemble prédéfini de motifs de bits codés,
des moyens (269) pour décaler plus tôt dans le temps des impulsions sélectionnées parmi lesdites impulsions d'excitation en réponse à la détection de l'un quelconque desdits motifs de bits codés dudit premier ensemble prédéfini,
un second dispositif de surveillance de données relié auxdits bits codés capable de détecter l'apparition d'un quelconque motif d'un second ensemble prédéfini de motifs de bits codés,
des moyens pour allonger la durée d'au moins une desdites impulsions d'excitation en réponse à la détection de l'un quelconque desdits motifs de bits codés dudit second ensemble prédéfini, et
des moyens pour activer et désactiver un laser en réponse auxdites impulsions d'excitation de manière à effectuer un enregistrement sur un support optique.

7. Dispositif selon la revendication 6, dans lequel ledit premier ensemble prédéfini de motifs de bits codés inclut un motif de deux bits codés consécutifs ayant ladite seconde valeur binaire.

8. Dispositif selon la revendication 7, dans lequel ladite première valeur binaire correspond à un 1 et ladite seconde valeur binaire correspond à un 0, et dans lequel ledit premier ensemble prédéfini de motifs de bits codés inclut 1100, 10100 et 00100.

9. Dispositif selon les revendications 6 à 8, dans lequel ladite première valeur binaire correspond à un 1 et ladite seconde valeur binaire correspond à un 0, et dans lequel ledit second ensemble prédéfini de motifs de bits codés inclut 000111.

10. Dispositif pour mémoriser des données sur un support optique, comportant:
un codeur pour convertir des mots de données binaires en mots de code binaire dans lesquels des bits codés ont des première et seconde valeurs binaires à un intervalle d'horloge prédéfini,
un générateur d'impulsions sensible auxdits bits codés, dans lequel des impulsions d'excitation ayant une durée uniforme inférieure audit intervalle d'horloge sont générées pendant chaque intervalle d'horloge dans lequel lesdits bits codés ont ladite première valeur binaire,
un premier dispositif de surveillance de données (248) recevant en tant qu'entrée lesdits bits codés et détectant l'apparition d'un quelconque motif parmi un premier ensemble prédéfini de motifs de bits codés,
un circuit de compensation d'écriture (249) capable de décaler plus tôt dans le temps des impulsions d'excitation sélectionnées en réponse à une sortie dudit premier dispositif de surveillance de données,
un second dispositif de surveillance de données recevant en tant qu'entrée lesdites bits codés et détectant l'apparition d'un quelconque motif parmi un second ensemble prédéfini de motifs de bits codés et capable d'étendre au moins une desdites impulsions d'excitation en réponse à celle-ci, et
des moyens pour activer et désactiver un laser en réponse auxdites impulsions d'excitation de manière à effectuer un enregistrement sur un support optique.

11. Dispositif selon la revendication 10, dans lequel ladite première valeur binaire correspond à un 1 et ladite seconde valeur binaire correspond à un 0, et dans lequel ledit premier ensemble prédéfini de motifs de bits codés inclut 1100, 10100 et 00100.

12. Dispositif selon les revendications 10 et 11, dans lequel ladite première valeur binaire correspond à un 1 et ladite seconde valeur binaire correspond à un 0, et dans lequel ledit second ensemble prédéfini de motifs de bits codés inclut 000111.

13. Dispositif pour mémoriser des données sur un support optique, ledit dispositif comportant:
un codeur (13) pour convertir des mots de données binaires en mots de code binaire dans lesquels des bits codés ont des première et seconde valeurs binaires à un intervalle d'horloge prédéfini,
un générateur d'impulsions (14) sensible auxdits bits codés de sorte que des impulsions d'excitation ayant une durée uniforme inférieure audit intervalle d'horloge sont générées pendant chaque intervalle d'horloge dans lequel lesdits bits codés ont ladite première valeur binaire,
un premier dispositif de surveillance de données (248) recevant en tant qu'entrée lesdits bits codés et détectant l'apparition de bits codés consécutifs ayant ladite seconde valeur binaire,
un circuit de compensation d'écriture (249) capable de décaler plus tôt dans le temps des impulsions d'excitation sélectionnées en réponse à une sortie dudit premier dispositif de surveillance de données,
un second dispositif de surveillance de données recevant en tant qu'entrée lesdites bits codés et détectant l'apparition d'un motif de bits codés représentatif d'une composante à basse fréquence et capable d'étendre au moins une desdites impulsions d'excitation en réponse à celle-ci, et
des moyens pour activer et désactiver un laser en réponse auxdites impulsions d'excitation de manière à effectuer un enregistrement sur un support optique.

14. Dispositif selon la revendication 13, dans lequel ladite première valeur binaire correspond à un binaire 1 et la seconde valeur binaire correspond à un binaire 0, et dans lequel ledit ensemble de motifs de bits codés inclut 000111.
